# EUROPEAN PATENT SPECIFICATION

(11) **EP 3 428 678 B1**
(45) Date of publication and mention of the grant of the patent: **15.12.2021**
(21) Application number: 17181441.1
(22) Date of filing: 14.07.2017
(51) Int. Cl.: G01S 7/481

(54) **A VISION SYSTEM AND METHOD FOR A VEHICLE**
SICHTSYSTEM UND -VERFAHREN FÜR EIN FAHRZEUG
SYSTÈME ET PROCÉDÉ DE VISION POUR VÉHICULE

(43) Date of publication of application: 16.01.2019
(73) Proprietor: Veoneer Sweden AB, 447 83 Vårgårda (SE); Beamagine S.L., 08755 Castellbisbal (ES)
(72) Inventor: ROYO, Santiago, 08755 Castellbisbal (ES); RIU, Jordi, 08660 Balsareny (ES); RODRIGO, Noel, 25005 Lleida (ES); SANABRIA, Ferran, 08912 Badalona (ES); KÄLLHAMMER, Jan-Erik, 582 46 Linköping (SE)
(74) Representative: Müller Verweyen

(56) References cited:
- US-A1- 2004 155 759
- US-A1- 2015 258 990
- US-A1- 2015 293 532
- US-A1- 2015 378 023

## Description

The invention relates to a vision system for a vehicle according to claim 1.

Such systems are generally known, for example from WO 2012 123809 A1 and WO 2014 125153 A1. Herein, a surface is illuminated by a light beam that originates from a light source, typically a laser light source, and is reflected by the surface. The reflected light beam is incident on a light deflection device where it is deflected in a specific manner to either a light sensing device or to an absorber. The time-of-flight of the light beam is indicative of the distance between the system and a point on the surface, which spatial location is derivable from information on the light deflection device and by the time-of-flight. Such systems typically cover a field of view of up to 60°, although larger fields of view are possible. To extend the field of view a plurality of such systems could be installed in or on the vehicle which would necessitate an according plurality of light sources. These laser light sources together with potentially present scanning devices to redirect the laser beam and are the most expensive part of the assembly, leading to high overall costs.

A similar system is also disclosed in US 2015/0378023 A1.

US 2015/0293532 A1 discloses a vehicular collision avoidance system comprising a system controller, pulsed laser transmitter, a number of independent LADAR sensor units, a cabling infrastructure, internal memory, a scene processor and a data communications port. The system is capable of developing a 3-D scene from the multiple independent LADAR sensor units.

US 2015/0258990 A1 discloses a vehicle and LADAR sensor assembly system which makes use of forward mounted long range LADAR sensors and short range LADAR sensors mounted in auxiliary lamps to identify obstacles and to identify potential collisions with the vehicle.

US 2004/0155759 A1 discloses a stand alone sensor module having built in intelligence that provides object detection for both a vehicle and stationary applications.

Another approach to extend the field of view with only a single light source is to rotate a combined laser/detector unit. This requires additional electronic and mechanic parts to rotate and control the unit, and these systems typically cover a scene that is narrow in the vertical direction or with limited spatial resolution. Further, the presence of moving parts may lead to complications in the maintenance of the device due to mechanical wear or other undesirable effects, such as noise and vibration, which can be relevant depending on the desired final use of the system.

The aforementioned alternatives need to be improved with regard to the field of view, the cost-effectiveness, maintenance, and the simplicity of the assembly.

The object of the invention is to provide a vision system and a vision method for a vehicle covering an extended field of view and being particularly cost-effective and simple.

The invention solves this problem with the features of the independent claims. The system according to the present invention comprises a plurality of receiving units, wherein each receiving unit comprises a corresponding light deflection device and a corresponding light sensing device. According to the invention, 3D measurements are performed in a plurality of receiving units each covering potentially different field of view which add up to an extended field of view using real-time or post-processing.

The plurality of receiving units, wherein each receiving unit comprises a corresponding light deflection device and a corresponding light sensing device, covers a specific field of view each and can be distributed on or in the vehicle to cover an environmental scene as required. The proper distribution of the receiving units avoids the necessity of rotating parts.

The invention is particularly cost-effective as the number of light sources is less than the number of receiving units.

The invention is applicable to any kind of vehicles, in particular motor vehicles and non-motorized vehicles, like cars, drones, boats, trains, airplanes and so on.

In a preferred embodiment, the vision system comprises an optical beam splitting arrangement on the emitting side for generating a plurality of light beams from said light beam, wherein said light beams are emitted into the environment of the vehicle for scanning said surface. The optical beam splitting arrangement on the emitting side is fed from the at least one light source by the at least one light beam. The at least one light beam can be a single light beam emitted from a single light source only or a plurality of light beams. The properties of potentially different light beams could be the same, but the light beams could also differ in their wavelength, polarization, and/or intensity.

The optical beam splitting arrangement advantageously generates a plurality of light beams which could also have different or equal properties. The light beams are emitted in the environment of the vehicle preferably by a plurality of emitting units, wherein more preferably, the number of light beams equals the number of emitting units or is selectable with respect to the amount of power desired in a particular direction. The vision system comprises a plurality of receiving units, wherein each receiving unit is preferably adapted to receive and sense at least one of the light beams directly reflected by the scanned surface.

Preferably, the optical beam splitting arrangement comprises a plurality of optical fibers fed by at least one laser light source. The optical fibers could be used for transmission of light, preferably laser beams. The use of preferably flexible optical fibers allow a particular simple positioning of the at least one light source and preferably of the plurality of emitting units within the vehicle. The light beam generated by the at least one light source could be transmitted to other optical components comprised in the optical beam splitting arrangement to generate the at least one light beam. The plurality of light beams could preferably be transmitted via optical fibers to the plurality of emitting units. The optical beam splitting arrangement can comprise one or more bundles of optical fibers, or one or more bundles of fiber-optic units, to enable a higher peak power of light beams transmitted to desired emitting units.

Preferably, the number of optical fibers, or optical fiber units or bundles, is greater than or equal to the number of light sources to provide the plurality of emitting units with a corresponding number of beams. Preferably, the number of optical fiber units is greater than or equal to the number of receiving units to enable the possibility of combining several fibers in one emitting unit to allow for higher emitted power.

In a preferred embodiment, the number of light beams equals (or is higher than) the number of receiving units. Each receiving unit could be adapted to receive one light beam emitted at an emitting unit that corresponds to one of the plurality of receiving units.

According to the invention, the vision system comprises one scanning device which is controllable to direct the emitted light beam into different directions into the vehicle environment. The number of scanning devices is preferably less than the number of receiving units. The one scanning device is arranged on the emitting side of the optical unit and is adapted to redirect the light beam into the environment. It is cost-effective to have less scanning devices than receiving units. The one scanning device can redirect the light beam so that a plurality of receiving units can detect the respective light beam portions which are reflected by the scanned surface.

According to the invention, the number of light sources is one. Since the light source, preferably a laser, more preferably a fiber laser, is the most expensive part of the vision system, this embodiment is particularly cost-effective. The light beam generated by the light source could preferably be divided or split into a plurality of light beams feeding the emitting units.

It is advantageous that each receiving unit is arranged to receive light in a different direction from the environment. This allows coverage of a particularly wide field of view. Preferably, several receiving units with a certain field of view could be adapted to receive light from different directions. This leads to a field of view that is composed of the field of views of the individual receiving units and the composed field of view is larger than the field of view of a single receiving unit.

Advantageously, each receiving unit has a field of view in the range between 30° and 120°.

In a preferred embodiment, the plurality of receiving units in combination provides an overall 360° field of view. In this embodiment, the full environmental scene can be monitored in a preferably horizontal direction. To achieve a 360° field of view, for example, six receiving units with a field of view of 60° each could be distributed with equal differences between their viewing directions. Also possible is the monitoring of the scene with a spherical, wide angle or fish-eye field of view which could be advantageous if the vision system is used in a flying vehicle and/or a drone. Other arrangements in which the field of view of the multiple receiving units is arranged to be different, to achieve some performance improvement of the overall system, are possible.

Preferably, each receiving unit is positioned at different locations in or on the vehicle. The receiving units are preferably positioned differently to guarantee optimal fields of views of the individual receiving units, i.e., the positions of the receiving units are chosen so that the fields of views are not obstructed by for example the vehicle itself. The receiving units could be distributed on the vehicle to ensure an advantageous field of view and/or in the vehicle to ensure an advantageous protection against rain, dirt, snow, etc.

Advantageously, at least one receiving unit is positioned at every of the four sides of the vehicle. This embodiment is particularly advantageous if a large or full horizontal field of view is to be achieved. At least one receiving unit could preferably be positioned at, and directed to, the left, right, front, and back side of the vehicle, respectively.

Preferably, a plurality of receiving units is provided at the left side and/or right side of the vehicle, respectively. This embodiment allows a complementary field of view to monitor the left and the right of the vehicle.

In a preferred embodiment, at least one light source, the at least one light sensing device and the data processing device form at least one LIDAR system adapted to measure time-of-flight values. The time-of-flight is the runtime of the light beam and/or a portion of a light beam from the light source via reflection by the scanned surface in the vehicle's environment, until sensing by the light sensing device in the vision system. The time-of-flight corresponds to the distance between the vision system and the scanned surface, which is estimated or computed by the data processing device.

By an appropriate scanning technique, preferably realized by at least one scanning device that directs the emitted light beam to the scanned surface, the environment can be scanned.

The spatial resolution depends on the number of deflection elements comprised in the deflection device, the laser repetition rate, and on the number of light sensors comprised in the light sensing element. The measurement of the time-of-flight values can acquire depth information on a z-axis in addition to x- and y-coordinates given by the scanning procedure. In a preferred embodiment wherein the light source is a laser, the vision system comprises a LIDAR system.

In a preferred embodiment the at least one light sensing device comprises focal plane arrays, PIN, photo diodes, avalanche photo diodes, photomultiplier tubes, single photon avalanche diodes, or an array of any of the aforementioned, and/or are adapted to detect light in the range of UV, near infrared, short/mid/long wavelength infrared, and/or sub-mm/THz band, preferably wideband visible, and near infrared or short wavelength infrared. Sensors for LIDAR can be PIN photo diodes, avalanche photo diodes, single photon avalanche diodes and photomultiplier tubes, either based on Silicon or InGaAs technologies. Also arrays of the aforementioned devices can be comprised in the light sensing device. The radiometric measurement could preferably be used to modify the responsivity of the light sensing device to enhance stability, frame rate, and/or other features of the light sensing device. Further, an interesting feature of the system is its ability to perform foveated imaging procedures, that is, to adjust the spatial resolution in scanning or detecting some region of interest, e.g., a pedestrian or a cyclist at the side of the vehicle, or some long distance obstacle on the road.

In the following the invention shall be illustrated on the basis of preferred embodiments with reference to the accompanying drawings as non-limiting cases, wherein:
- Fig. 1: shows a schematic view of a vision system;
- Fig. 2: shows a vision system mounted on a vehicle;
- Fig. 3: shows an embodiment of an optical unit of the vision system; and
- Fig. 4: shows an embodiment of an optical unit of a vision system in a further embodiment.

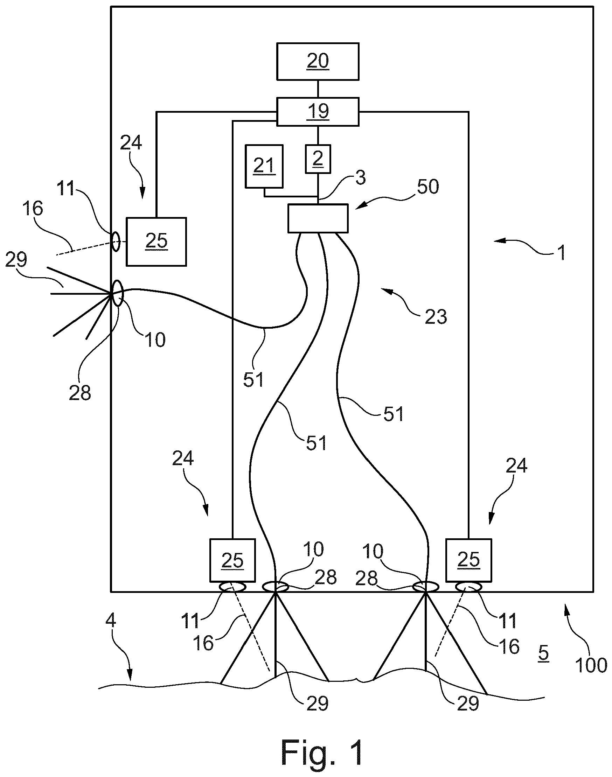

According to figure 1, the vision system 1 is mounted in or on a vehicle 100 to capture images of a scanned surface 4 in the environment 5 of the vehicle 100. The vision system 1 comprises an emitting unit 23 which comprises an optical beam splitting arrangement 50, optical fibers 51, and a light source 2 to emit a light beam 3. The system further comprises receiving units 25 which are arranged on a receiving side 24 and a data processing device 19. The vision system 1 could include other detection systems and/or sensors such as radar or other cameras. The vision system 1 could preferably communicate with a driver assistance device 20.

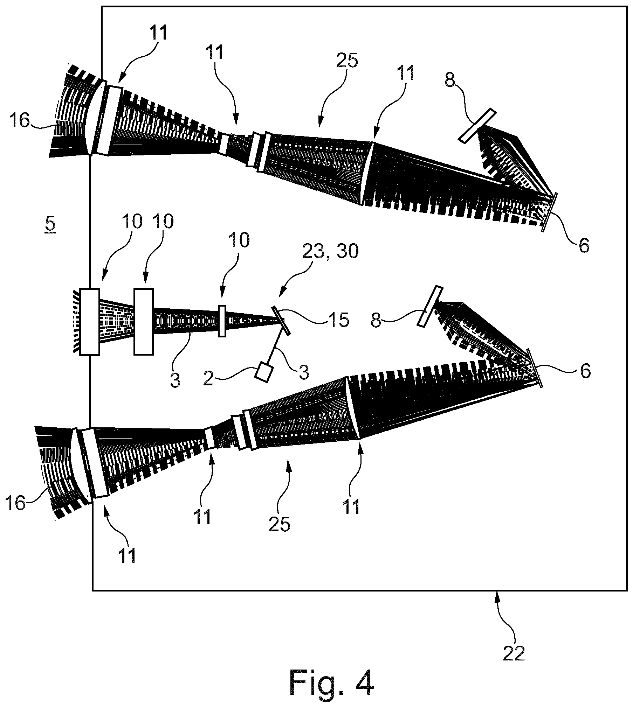

The light source 2 is adapted to emit a light beam 3. In some embodiments, like in Figures 1 to 3, the light beam 3 can be fed to an optical beam splitting arrangement 50 on the emitting side 23 to split the light beam 3 into at least two light beams 29. In other embodiments, like in Figure 4, an optical beam splitting arrangement 50 may not be necessary.

The light source 2 preferably comprises a laser, including laser diodes, fiber lasers, etc., such that the vision system 1 is a LIDAR system. But also other embodiments of the light source 2 are possible, e.g. LEDs, or polarized light sources of different wavebands, adapted to correspond with the recording capabilities of a light sensing device 8 which is comprised in one or more of the receiving units 25.

The light beam 3 is preferably divided or split, and a portion of the light beam 3 is directed towards a trigger device 21 to allow an accurate time-of-flight estimation. The trigger device 21 is preferably in communication with the data processing device 19 to schedule or trigger the time-of-flight measurements. The trigger device 21 is preferably acting on the light beam 3, such that only one trigger device 21 is necessary for performing the time-of-flight measurements in all receiving units 25. More generally, the number of trigger devices 21 is lower than the number of receiving units 25, and can correspond to the number of light sources 2. Alternatively, the occurrence of the emitted light pulse is electronically derived from the known latency between the electronic triggering of the light pulse and the actually emitted light.

Preferably, the optical beam splitting arrangement 50 comprises optical fibers 51 to guide the plurality of light beams 29 to be emitted into the environment 5. In this embodiment three light beams 29 are generated and transmitted by the optical fibers 51 by way of example. The light beam 3 could preferably be guided in an optical fiber to the optical beam splitting arrangement 50 in a flexible manner. The plurality of light beams 29 is transmitted via proper optical devices, for example, beam splitters, prims, lenses, optical fibers 51, and/or compositions thereof, towards an emitting end 28 of the optical fibers 51 so that the receiving units 25 are able to detect light beam portions emitted at the emitting side 23 and reflected by the scanned surface 4.

The emission of the light beam 3 (Figure 4) or the plurality of light beams 29 (Figures 1 to 3) into the environment 5 could be performed and/or controlled by beam redirection by a scanning device 15, and/or widening of each light beam 3, 29, for example by a first lens system 10. Also a galvanometric mirror or other redirection means can be used for scanning.

In the embodiment of Figures 1 to 3, to each light beam 29 a receiving unit 25 is assigned, such that the light resulting from the reflection of a particular light beam 29 by the scanned surface 4 enters the corresponding receiving unit 25.

The light beams 29 eventually interact with the environment 5, in particular with a scanned surface 4 or dust, snow, rain, and/or fog, where the light beams 29 are reflected. For each light beam 29, the reflected portion 16 of the light beam 29 enters the corresponding receiving unit 25 on the receiving side 24 preferably through a second lens system 11.

The light entering each receiving unit 25 is sensed by the corresponding light sensing device 8 and the sensed image data is processed preferably in a combined manner with data fusion by the data processing device 19 to generate an overall field of view from the fields of view of the individual receiving units 25.

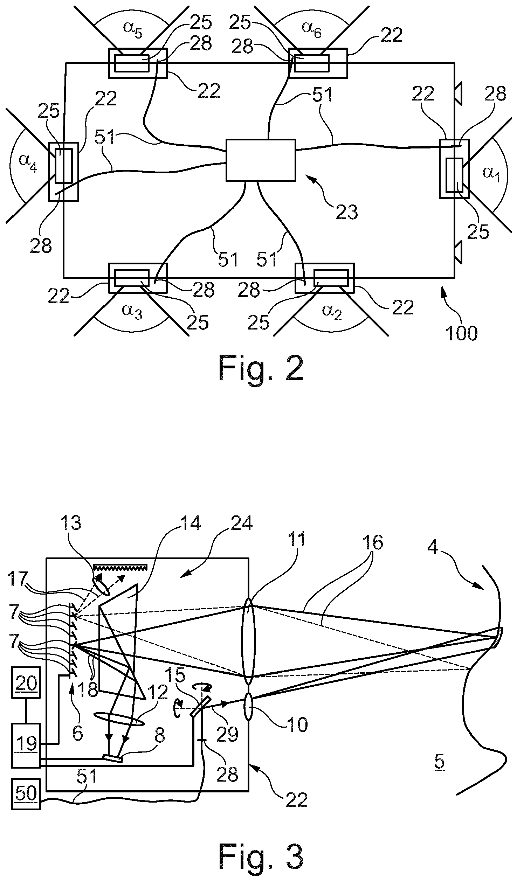

In the embodiment shown in figure 1, the vision system 1 comprises three receiving units 25 and three optical fibers 51. Another embodiment with a different number and positioning of optical fibers 51 and receiving units 25 is illustrated in figure 2 as a non-limiting example of the multiple sensor approach.

Figure 2 shows a vision system 1 with a plurality of receiving units 25 mounted on a vehicle 100, where it is understood that each receiving unit 25 corresponds to an optical fiber or fiber bundle 51. Figure 2 is a top view of the vehicle 100 and the front of the vehicle 100 corresponds to the part of the vehicle 100 in which the angle α1 indicates the field of view of the corresponding receiving unit 25. Preferably, the emitting end 28 of each fiber bundle 51 is arranged close to, and in the same optical unit 22 with, the corresponding receiving unit 25. Consequently, the number of optical units 22 can correspond to the number of receiving units 25 and/or to the number of optical fibers / fiber bundles 51, although this is not mandatory. Several fibers 51 can be combined to allow higher emitted power in selected directions.

In Figure 2 the fields of view of the individual receiving units 25 are indicated by the angles α1 to α6. In this embodiment, one receiving unit 25 is mounted in the front part and directed towards the front of the vehicle 100, two receiving units 25 are mounted in the left and right and directed towards the left and right, respectively, and one receiving unit 25 is mounted in the back part and directed towards the back. Each unit 25 on the left or the right can be directed in different directions to allow a wider combined field of view.

The plurality of receiving units 25 allows covering a wide field of view, up to 360° around the vehicle. An example of an automotive application could consider different specifications for front, rear, and/or side views.

The angles α1 to α6 could equal each other. However, the angles α1 to α6 can also be different in a specific manner. A smaller angle corresponds to a narrower field of view but allows an advantageous angular resolution, a larger range of measurement and/or sampling rate as a larger angle. This is particularly important in the principal locomotion direction of the vehicle 100 in which the velocity is typically larger than in other directions. The results of the different imaging modalities may be combined in the interest of the performance of the overall system.

The plurality of receiving units 25 could be adapted to measure different properties of incident light, more preferably power, wavelength, and/or polarization. All wavelength, and/or combinations of a plurality of wavelengths, could preferably be received by one or more of the plurality of receiving units 25. In one embodiment, each one of the light beams 29 has different properties, more preferably power, wavelength, and/or polarization.

One or more light sources 2 could be used, but the number of light sources 2 is lesser than the number of receiving units 25.

In another embodiment, additional one or more beam splitters can be arranged in the optical path of one or more of the light beams 29. For example, to feed a group of emitting ends 28, a single light beam 29 could be directed by the optical fiber 51 towards the group of emitting ends 28, where the light beam 29 is split and the split portions of the light beam 29 are guided to the emitting ends 28 to be emitted into the environment 5.

When a larger range is required for an emitting unit 25 to observe the environment 5 far apart, several optical fibers 51 and/or fiber-optic units can be bundled together to enable a higher peak power of the light beam 29. For example, if more range is required in the forward direction of a moving vehicle, two or more laser bundles can be combined into the same emitting unit 23 to emit two or more times the power of a single laser beam. To adjust the field of view, the range, the spatial resolution and/or other technical details, the specifications of the light beams 29 may not be equivalent for each light beam 29 emitted by the emitting unit 23.

In other words, the implementation of the multiple sensor approach to acquire data of the full surrounding shown in Figure 2 can have six receiving units 25 each of which covering an angle in the range up to 120°, preferably at least 15°, so that the total field of view defined by the composition of the fields of view of the individual receiving units 25 adds up to 360°. The fields of view of each two of the receiving units 25 can overlap to ensure a reliable coverage of the overall 360° field of view and/or to enable image merging in the data processing device 19. It is also possible to cover a smaller total field of view, preferably 60°, more preferably 90°, even more preferably 120° and most preferably 180°. For example, it could be advantageous to acquire data in the front of a vehicle 100 when the vehicle 100 moves forward and in the back when the vehicle 100 moves backwards.

It is possible to mount each receiving unit 25 and the corresponding end 28 of the corresponding fiber / fiber bundle 51 in a corresponding optical unit 22 which is adapted to emit and receive light as shown in Figures 2 and 3.

In the following, preferred details of an optical unit 22 are explained with respect to Figure 3. The light beam 29 can in some embodiments be redirected by a scanning device 15, for example a mirror rotatable around at least one axis. The light beam 29 can in some embodiments be widened by suited optical components, e.g., a first system of lenses 10, which may defocus, and thereby widen, the light beam 29, towards the scanned surface 4. The scanning device 15, like a mirror, a group of mirrors, a prism arrangement such as Risley prisms, and/or other suited optical component and/or a group thereof, is adapted to be controllable by and in communication with the data processing device 19. The scanning device 15, which may in particular be a MEMS device, is preferably adapted to be rotatable around at least two axes and/or a plurality of scanning devices 15 is adapted to rotate around at least one axis, allowing scanning of the environment 5 of the vehicle 100. For example a first scanning device 15 could be arranged to perform the rotation around a first axis and a second scanning device 15 could be arranged to perform a rotation around a second axis. In another embodiment, a cylindrical lens could be used to widen the light beam 3, 29.

By means of the scanning device 15, the light beam 29 can be directed sequentially towards different points or spots on the scanned surface 4. In other embodiments, the scanning device 15 can be dispensed with.

A portion of the light beam 29 is reflected on the scanned surface 4 or by other reflectors and/or scatterers in the environment 5, and a reflected light beam portion 16 of the light beam 29 enters the optical unit 22, e.g., by passing a second lens system 11, alternatively an entrance window. The first lens system 10 and the second lens system 11 can be the same. The light beam portion 16 travelling through the optical unit 22 is preferably directed towards a prism 14 placed in the optical path of the light beam portion 16 within the optical unit 22, allowing for optical path division and/or light deflection.

The light beam portion 16 is directed towards a light deflection device 6 comprising a plurality of light deflection elements 7, each of which is adapted to deflect the light beam portion 16 and to change the direction of the redirected light between at least a first deflection direction as a first light beam portion 18 and a second deflection direction as a second light beam portion 17. The first light beam portion 18 preferably is deflected via the prism 14, and is directed to, and incident on, the light sensing device 8 preferably through a third lens system 12.

Preferably, the second light beam portion 17 is directed to a dump element to reduce light scattering within the receiving unit 28 and/or the optical unit 22, or more preferably through a fourth lens system 13 to a light detecting device enabling the capturing of image data, which can be of different types, including, e.g., RGB image data, a polarimetric image, a false color image, and/or some other type. The data of the light detecting device, preferably the image data of certain pixels acquired by the light detecting device, could be integrated or averaged to yield a single-valued background light intensity value as a radiometric measurement to adjust the light sensing device 8 and/or light detecting device, or pluralities thereof, advantageously.

Preferably, the light deflection device 6 is a DMD, i.e., a digital micro mirror device. The deflection device 6 is in communication with the data processing device 19. The data processing device 19 is adapted to control the deflection elements 7. Alternatives for the deflection device 6 to the DMD may be other active optical elements, in particular pixelated arrays (such as LCDs) or even deformable mirrors.

The data processing device 19 can comprise a pre-processor adapted to control the capture of images, time-of-flight measurements, and/or other data by the light sensing device 8 and the light detecting device and the control of the deflection device 6, receive the electrical signal containing the information from the light sensing device 8 and the light detecting device and from the light deflection device 6. The pre-processor may be realized by a dedicated hardware circuit, for example a Field Programmable Gate Array (FPGA) or an Application Specific Integrated Circuit (ASIC). Alternatively the pre-processor, or part of its functions, can be realized in the data processing device 19 or a System-On-Chip (SoC) device comprising, for example, FPGA, processing device, ARM and/or microprocessor functionality.

The data processing device 19 is preferably a digital device which is programmed or programmable and preferably comprises a microprocessor, micro-controller, digital signal processor (DSP, processing device), field programmable gate array (FPGA), or a System-On-Chip (SoC) device, and preferably has access to, or comprises, a memory device. The data processing device 19, pre-processing device and the memory device are preferably realized in an on-board electronic control unit (ECU) and may be connected to other components of the vision system 1 via a separate cable or a vehicle data bus. In another embodiment the ECU and one or more of the vision systems 1 can be integrated into a single unit. All steps from data acquisition, imaging, depth estimations, pre-processing, processing to possible activation or control of driver assistance device can be performed automatically and continuously during driving in real time.

A plurality of receiving units 25 and/or optical units 22 could communicate with separate data processing devices 19, communicate with a single data processing device 19, or work with a master-slave configuration. In particular, the images recorded from the environment 5 could be used for physical calibration of the plurality of the receiving units 25 and/or optical units 22 to cover a large composed field of view. It is also possible that a set of receiving units 25 and/or optical units 22 is grouped together and controlled by a common, but not centralized, data processing device 19, depending on the functionality. For example, receiving units 25 and/or optical units 22 in the front part of the vehicle could be grouped together. Also the specifications of groups of the receiving units 25 and/or optical units 22 could be equal or different to enhance the functionality of the vision system 1.

Image and data processing is carried out by corresponding software in the data processing device 19. The image and data processing in the processing unit 19 may for example comprise identifying and preferably also classifying possible objects in the surrounding of the vehicle, such as pedestrians, other vehicles, bicyclists and/or large animals, tracking over time the position of object candidates identified in the captured images, computing depth images based on the time-of-flight values, and activating or controlling at least one driver assistance device 20 for example depending on an estimation performed with respect to a tracked object, for example an estimated collision probability. The driver assistance device 20 may in particular comprise a display device to display information on a possibly detected object and/or on the environment of the vehicle. However, the invention is not limited to a display device. The driver assistance device 20 may in addition or alternatively comprise a warning device adapted to provide a collision warning to the driver by suitable optical, acoustical and/or haptic warning signals; one or more restraint systems such as occupant airbags or safety belt tensioners, pedestrian airbags, hood lifters and the like; and/or dynamic vehicle control systems such as brake or steering control devices.

The driver assistance device 20 may be able to trigger defined driver assistance action to assist the driver, e.g. braking, acceleration, steering, showing information etc., based on the data provided by the data processing device 19. The data processing device 19 can also be used as input to highly automated, piloted, and/or autonomous driving functions in a vehicle.

Figure 4 shows an embodiment of an optical unit 22 comprising a single light emitting unit 30, for example having a 60° scanning device 15, and two receiving units 25, for example each having a 30° field of view to cover the whole field of view. The light emitting unit 30 comprises a single light source 2 and a single scanning device 15. In this embodiment, a single light beam 3 is emitted into the environment 5. An optical beam splitting arrangement 50 is not required. Consequently, there is no plurality of light beams 29 on the emitting side 23, and also optical fibers 51 for guiding the plurality of light beams 29 may not be required. The light beam 3 is generated by the light source 2 and widened by a first lens system 10 before being directed towards the scanned surface 4.

Each receiving unit 25 in Figure 4 is adapted to capture light originating from the same light emitting unit 30 and reflected by the scanned surface 4. The receiving units 25 can be identical, and can be similar to the one shown in Figure 3. However, the prism 14 shown in Figure 3 has been dispensed with in the embodiment of Figure 4, which reduces the optical losses.

## Claims

1. A vision system (1) for a vehicle (100) comprising
- only one light source (2) arranged on an emitting side (23) adapted to generate at least one light beam (3);
- only one scanning device (15) arranged on the emitting side (23) and controllable to direct the light beam (3, 29) into different directions into the vehicle environment (5); **characterized in that**
said vision system (1) further comprising
- a plurality of receiving units (25) each arranged on a receiving side (24) with a light deflection device (6) comprising an array of light deflection elements (7), wherein each light deflection element (7) is adapted to redirect light which is incident on said light deflection element (7) from a scanned surface (4) in an environment (5) of the vehicle (100), and to change the direction of the redirected light between at least a first deflection direction and a second deflection direction, and a light sensing device (8) to sense light redirected from the light deflection device (6) in said first deflection direction;
- a data processing device (19);
- wherein each receiving unit (25) comprises a corresponding light deflection device (6) and a corresponding light sensing device (8);
- wherein the one scanning device (15) can redirect the light beam so that a plurality of receiving units (25) can detect the respective light beam portions which are reflected by the scanned surface (4).

2. The vision system as claimed in claim 1, **characterized in that** the vision system (1) comprises an optical beam splitting arrangement (50) on the emitting side (23) for generating a plurality of light beams (29) from said light beam (3), wherein said light beams (29) are emitted into the environment (5) of the vehicle (100) for scanning said surface (4).

3. The vision system as claimed in claim 2, **characterized in that** said vision system (1) comprises a plurality of optical fibers (51), or bundles of optical fibers (51), wherein each optical fiber (51), or each bundle of optical fibers (51), is adapted to guide one of said light beams (29).

4. The vision system as claimed in claim 3, **characterized in that** the number of optical fibers (51), or bundles of optical fibers (51), is greater than or equal to the number of light sources (2).

5. The vision system as claimed in any one of the preceding claims, **characterized in that** each receiving unit (25) is arranged to receive light in a different direction from the environment (5).

6. The vision system as claimed in any one of the preceding claims, **characterized in that** each receiving unit (25) has a field of view in the range up to 120°.

7. The vision system as claimed in any one of the preceding claims, **characterized in that** the plurality of receiving units (25) in combination provides an overall 360° field of view.

8. The vision system according to any one of the preceding claims, **characterized in that** each receiving unit (25) is positioned at different locations in or on the vehicle (100), in particular at every of the four sides of the vehicle (100).

9. The vision system according to any one of the preceding claims, **characterized in that** a plurality of receiving units (25) is provided at the left side and/or right side of the vehicle (100), respectively.

10. The vision system according to any one of the preceding claims, **characterized in that** the one light source (2), the at least one light sensing device (8), and the data processing device (19) form at least one LIDAR system to measure a set of time of flight values.

11. The vision system (1) according to any one of the preceding claims, **characterized in that** the at least one light sensing device (8) comprises avalanche photo diodes, photomultiplier tubes, single photon avalanche diodes, phased arrays, or an array of any of the aforementioned and the light sensing device (8) is adapted to detect light in the range of UV, near infrared, short/mid/long wavelength infrared, and/or sub-mm/THz band, preferably wideband visible, and near infrared or short wavelength infrared.

12. A vision method for a vehicle (100) comprising
- generating one light beam (3) in only one light source (2) arranged on an emitting side (23);
- controlling only one scanning device (15) arranged on the emitting side (23) direct the light beam (3, 29) into different directions into the vehicle environment (5);
**characterized in**
- deflecting light incident on a light deflection element (7) comprised in a light deflection device (7) in a plurality of receiving units (25) each arranged on a receiving side (24), wherein each light deflection element (7) is adapted to redirect light which is incident on said light deflection element (7) from a scanned surface (4) in an environment (5) of the vehicle (100), and to change the direction of the redirected light between at least a first deflection direction and a second deflection direction, and sensing light redirected from the light deflection device (6) in said first deflection direction with a light sensing device (8);
- processing the data by the at least one light sensing device (8) comprised in the at least one receiving unit (25) with a data processing device (19);
- wherein each receiving unit (25) comprises a corresponding light deflection device (6) and a corresponding light sensing device (8);
- wherein the one scanning device (15) can redirect the light beam so that a plurality of receiving units (25) can detect the respective light beam portions which are reflected by the scanned surface (4).

## Patentansprüche

1. Ein Sichtsystem (1) für ein Fahrzeug (100) umfassend
- nur eine Lichtquelle (2), die auf einer Emitterseite (23) angeordnet ist und dazu eingerichtet ist, mindestens einen Lichtstrahl (3) zu erzeugen;
- nur eine Scanvorrichtung (15), die auf der Emitterseite (23) angeordnet und steuerbar ist, um den Lichtstrahl (3, 29) in verschiedene Richtungen in die Fahrzeugumgebung (5) zu richten; **dadurch gekennzeichnet, dass**
das Sichtsystem (1) ferner umfasst
- eine Vielzahl von Empfangseinheiten (25), die jeweils auf einer Empfangsseite (24) mit einer Lichtablenkungsvorrichtung (6) angeordnet sind, die ein Feld von Lichtablenkungselementen (7) umfasst, wobei jedes Lichtablenkungselement (7) dazu eingerichtet ist, Licht umzulenken, das von einer gescannten Oberfläche (4) in einer Umgebung (5) des Fahrzeugs (100) auf das Lichtablenkungselement (7) einfällt, und die Richtung des umgelenkten Lichts zwischen mindestens einer ersten Ablenkungsrichtung und einer zweiten Ablenkungsrichtung zu ändern, und eine Lichterfassungsvorrichtung (8) zum Erfassen von Licht, das von der Lichtablenkungsvorrichtung (6) in die erste Ablenkungsrichtung umgelenkt wird;
- eine Datenverarbeitungsvorrichtung (19);
- wobei jede Empfangseinheit (25) eine entsprechende Lichtablenkungsvorrichtung (6) und eine entsprechende Lichterfassungsvorrichtung (8) umfasst;
- wobei die eine Scanvorrichtung (15) den Lichtstrahl derart umlenken kann, dass eine Vielzahl von Empfangseinheiten (25) die jeweiligen Lichtstrahlteile detektieren kann, die von der gescannten Oberfläche (4) reflektiert werden.

2. Das Sichtsystem nach Anspruch 1, **dadurch gekennzeichnet, dass** das Sichtsystem (1) eine optische Strahlteileranordnung (50) auf der Emitterseite (23) zur Erzeugung einer Vielzahl von Lichtstrahlen (29) aus dem Lichtstrahl (3) umfasst, wobei die Lichtstrahlen (29) in die Umgebung (5) des Fahrzeugs (100) zum Scannen der Oberfläche (4) emittiert werden.

3. Das Sichtsystem nach Anspruch 2, **dadurch gekennzeichnet, dass** das Sichtsystem (1) eine Vielzahl von optischen Fasern (51) oder Bündeln von optischen Fasern (51) umfasst, wobei jede optische Faser (51) oder jedes Bündel von optischen Fasern (51) dazu eingerichtet ist, einen der Lichtstrahlen (29) zu leiten.

4. Das Sichtsystem nach Anspruch 3, **dadurch gekennzeichnet, dass** die Anzahl der optischen Fasern (51) oder der Bündel von optischen Fasern (51) größer oder gleich der Anzahl der Lichtquellen (2) ist.

5. Das Sichtsystem nach einem der vorangehenden Ansprüche, **dadurch gekennzeichnet, dass** jede Empfangseinheit (25) derart angeordnet ist, dass sie Licht von der Umgebung (5) aus einer anderen Richtung empfängt.

6. Das Sichtsystem nach einem der vorangehenden Ansprüche, **dadurch gekennzeichnet, dass** jede Empfangseinheit (25) ein Sichtfeld im Bereich von bis zu 120° aufweist.

7. Das Sichtsystem nach einem der vorangehenden Ansprüche, **dadurch gekennzeichnet, dass** die Vielzahl der Empfangseinheiten (25) in Kombination ein Gesamtsichtfeld von 360° ergibt.

8. Das Sichtsystem nach einem der vorangehenden Ansprüche, **dadurch gekennzeichnet, dass** jede Empfangseinheit (25) an unterschiedlichen Stellen im oder am Fahrzeug (100), insbesondere an jeder der vier Seiten des Fahrzeugs (100), positioniert ist.

9. Das Sichtsystem nach einem der vorangehenden Ansprüche, **dadurch gekennzeichnet, dass** eine Vielzahl von Empfangseinheiten (25) jeweils an der linken und/oder rechten Seite des Fahrzeugs (100) vorgesehen ist.

10. Das Sichtsystem nach einem der vorangehenden Ansprüche, **dadurch gekennzeichnet, dass** die eine Lichtquelle (2), die mindestens eine Lichterfassungsvorrichtung (8) und die Datenverarbeitungsvorrichtung (19) mindestens ein LIDAR-System zur Messung einer Reihe von Laufzeitwerten bilden.

11. Ein Sichtsystem (1) nach einem der vorangehenden Ansprüche, **dadurch gekennzeichnet, dass** die mindestens eine Lichterfassungsvorrichtung (8) Avalanche-Photodioden, Photomultiplierröhren, Einzelphotonen-Avalanche-Dioden, phasengesteuerte Felder oder ein Feld aus einem der vorgenannten Elemente umfasst und die Lichterfassungsvorrichtung (8) dazu eingerichtet ist, Licht im Bereich des UV, des nahen Infrarots, des kurzwelligen/mittelwelligen/langwelligen Infrarots und/oder des sub-mm/THz-Bands, vorzugsweise des sichtbaren Breitbands und des nahen Infrarots oder des kurzwelligen Infrarots, zu erfassen.

12. Ein Sichtverfahren für ein Fahrzeug (100) umfassend
- Erzeugen eines Lichtstrahls (3) in nur einer Lichtquelle (2), die auf einer Emitterseite (23) angeordnet ist;
- Steuern nur einer Scanvorrichtung (15), die auf der Emitterseite (23) angeordnet ist und den Lichtstrahl (3, 29) in verschiedene Richtungen in die Fahrzeugumgebung (5) richtet; **gekennzeichnet durch**
- Umlenken von auf ein Lichtablenkungselement (7) einfallendem Licht, das von einer Lichtablenkungsvorrichtung (7) umfasst ist, in einer Mehrzahl von Empfangseinheiten (25), die jeweils auf einer Empfangsseite (24) angeordnet sind, wobei jedes Lichtablenkungselement (7) dazu eingerichtet ist, auf das Lichtablenkungselement (7) einfallendes Licht von einer gescannten Oberfläche (4) in einer Umgebung (5) des Fahrzeugs (100) umzulenken, und die Richtung des umgelenkten Lichts zwischen mindestens einer ersten Ablenkungsrichtung und einer zweiten Ablenkungsrichtung zu ändern, und das von der Lichtablenkungsvorrichtung (6) in der ersten Ablenkungsrichtung umgelenkte Licht mit einer Lichterfassungsvorrichtung (8) zu erfassen;
- Verarbeiten der Daten von der mindestens einen Lichterfassungsvorrichtung (8), die von der mindestens einen Empfangseinheit (25) umfasst ist, mit einer Datenverarbeitungsvorrichtung (19);
- wobei jede Empfangseinheit (25) eine entsprechende Lichtablenkungsvorrichtung (6) und eine entsprechende Lichterfassungsvorrichtung (8) umfasst;
- wobei die eine Scanvorrichtung (15) den Lichtstrahl derart umlenken kann, dass eine Vielzahl von Empfangseinheiten (25) die jeweiligen Lichtstrahlteile, die von der gescannten Oberfläche (4) reflektiert werden, detektieren können.

## Revendications

1. Un système de vision (1) pour un véhicule (100) comprenant :
- une seule source de lumière (2) agencée sur un côté émission (23) adaptée pour générer au moins un faisceau de lumière (3) ;
- un seul dispositif de balayage (15) agencé sur le côté émission (23) et pouvant être commandé pour diriger le faisceau de lumière (3, 29) dans des directions différentes dans l'environnement (5) de véhicule ; **caractérisé en ce que**
ledit système de vision (1) comprend en outre
- une pluralité d'unités de réception (25) agencées chacune sur un côté réception (24) avec un dispositif de déflexion de lumière (6) comprenant un réseau d'éléments de déflexion de lumière (7), dans lequel chaque élément de déflexion de lumière (7) est adapté pour rediriger une lumière qui est incidente sur ledit élément de déflexion de lumière (7) depuis une surface balayée (4) dans un environnement (5) du véhicule (100), et pour changer la direction de la lumière redirigée entre au moins une première direction de déflexion et une seconde direction de déflexion, et un dispositif de captage de lumière (8) pour capter une lumière redirigée depuis le dispositif de déflexion de lumière (6) dans ladite première direction de déflexion ;
- un dispositif de traitement de données (19) ;
- dans lequel chaque unité de réception (25) comprend un dispositif de déflexion de lumière (6) correspondant et un dispositif de captage de lumière (8) correspondant ;
- dans lequel le dispositif de balayage (15) peut rediriger le faisceau de lumière de sorte qu'une pluralité d'unités de réception (25) puisse détecter les portions de faisceau de lumière respectives qui sont réfléchies par la surface balayée (4).

2. Le système de vision selon la revendication 1, **caractérisé en ce que** le système de vision (1) comprend un agencement de division de faisceaux optiques (50) sur le côté émission (23) pour générer une pluralité de faisceaux de lumière (29) depuis ledit faisceau de lumière (3), dans lequel lesdits faisceaux de lumière (29) sont émis dans l'environnement (5) du véhicule (100) pour balayer ladite surface (4).

3. Le système de vision selon la revendication 2, **caractérisé en ce que** ledit système de vision (1) comprend une pluralité de fibres optiques (51), ou des groupes de fibres optiques (51), dans lequel chaque fibre optique (51), ou chaque groupe de fibres optiques (51), est adapté(e) pour guider l'un desdits faisceaux de lumière (29).

4. Le système de vision selon la revendication 3, **caractérisé en ce que** le nombre de fibres optiques (51), ou de groupes de fibres optiques (51), est supérieur ou égal au nombre de sources de lumière (2).

5. Le système de vision selon l'une quelconque des revendications précédentes, **caractérisé en ce que** chaque unité de réception (25) est agencée pour recevoir une lumière dans une direction différente depuis l'environnement (5).

6. Le système de vision selon l'une quelconque des revendications précédentes, **caractérisé en ce que** chaque unité de réception (25) a un champ de vision dans la plage jusqu'à 120°.

7. Le système de vision selon l'une quelconque des revendications précédentes, **caractérisé en ce que** la pluralité d'unités de réception (25) en combinaison fournit un champ de vision global de 360°.

8. Le système de vision selon l'une quelconque des revendications précédentes, **caractérisé en ce que** chaque unité de réception (25) est positionnée à des emplacements différents dans ou sur le véhicule (100), en particulier au niveau de chacun des quatre côtés du véhicule (100).

9. Le système de vision selon l'une quelconque des revendications précédentes, **caractérisé en ce qu'**une pluralité d'unités de réception (25) est prévue respectivement du côté gauche et/ou du côté droit du véhicule (100).

10. Le système de vision selon l'une quelconque des revendications précédentes, **caractérisé en ce que** la source de lumière (2), l'au moins un dispositif de captage de lumière (8), et le dispositif de traitement de données (19) forment au moins un système LIDAR pour mesurer un ensemble de valeurs de temps de vol.

11. Le système de vision (1) selon l'une quelconque des revendications précédentes, **caractérisé en ce que** l'au moins un dispositif de captage de lumière (8) comprend des photodiodes à avalanche, des tubes photomultiplicateurs, des diodes à avalanche à photon unique, des réseaux pilotés en phase, ou un réseau de l'un quelconque des éléments mentionnés ci-dessus et le dispositif de captage de lumière (8) est adapté pour détecter une lumière dans la plage de l'UV, du proche infrarouge, de l'infrarouge à longueur d'onde courte/moyenne/longue, et/ou de la bande sub-mm/THz, de préférence du visible à large bande, et du proche infrarouge ou de l'infrarouge à longueur d'onde courte.

12. Un procédé de vision pour un véhicule (100) comprenant :
- la génération d'un faisceau de lumière (3) dans une seule source de lumière (2) agencée sur un côté émission (23) ;
- la commande d'un seul dispositif de balayage (15) agencé sur le côté émission (23) pour diriger le faisceau de lumière (3, 29) dans des directions différentes dans l'environnement (5) de véhicule ; **caractérisé par**
- la déflexion d'une lumière incidente sur un élément de déflexion de lumière (7) compris dans un dispositif de déflexion de lumière (7) dans une pluralité d'unités de réception (25) agencées chacune sur un côté réception (24), dans lequel chaque élément de déflexion de lumière (7) est adapté pour rediriger une lumière qui est incidente sur ledit élément de déflexion de lumière (7) depuis une surface balayée (4) dans un environnement (5) du véhicule (100), et pour changer la direction de la lumière redirigée entre au moins une première direction de déflexion et une seconde direction de déflexion, et le captage d'une lumière redirigée depuis le dispositif de déflexion de lumière (6) dans ladite première direction de déflexion avec un dispositif de captage de lumière (8) ;
- le traitement des données par l'au moins un dispositif de captage de lumière (8) compris dans l'au moins une unité de réception (25) avec un dispositif de traitement de données (19) ;
- dans lequel chaque unité de réception (25) comprend un dispositif de déflexion de lumière (6) correspondant et un dispositif de captage de lumière (8) correspondant ;
- dans lequel le dispositif de balayage (15) peut rediriger le faisceau de lumière de sorte qu'une pluralité d'unités de réception (25) puisse détecter les portions de faisceau de lumière respectives qui sont réfléchies par la surface balayée (4).
